# EUROPEAN PATENT APPLICATION

(11) **EP 1 433 978 A1**
(43) Date of publication of application: **30.06.2004**
(21) Application number: 02807563.8
(22) Date of filing: 02.08.2002
(51) Int. Cl.: F16H 48/08

(54) **DIFFERENTIAL GEAR FOR VEHICLE**

(71) Applicant: Kabushiki Kaisha Ondo Kousakusyo, Aki-gun, Hiroshima 737-1205 (JP)
(72) Inventor: Sugeta, Mitsuharu, KK Ondo Kousakusyo Hatihonmatsu, Higashihiroshima-shi, Hiroshima (JP); Shigemasa, Kazuhiro, KK Ondo Kousakusyo Hatihonmat, Higashihiroshima-shi, Hiroshima (JP)
(74) Representative: Senior, Alan Murray
(86) International application number: PCT/JP2002/007935
(87) International publication number: WO 2004/013519

(57) **Abstract**

There is disclosed an automotive differential device for transferring a rotational drive force from an automotive engine to a drive axle. This differential device includes: a differential gear mechanism equipped with a pair of side gears, three pinions meshing with the side gears, three pinion shafts pivotably supporting the three pinions, and a shaft supporting member supporting inner ends of the three pinion shafts; and a case member with an integral structure housing the differential gear mechanism. This case member includes a flange section receiving the rotational drive force by way of a ring gear, and a plurality of openings for mounting the side gears and pinions. The three pinions are oriented so that their axes form 120 degree phase angles, and the three openings are formed at three equidistant positions along the perimeter wall section of the case member.

## Description

### BACKGROUND OF THE INVENTION

The present invention relates to a differential device for automobiles. More specifically, in the present invention, three pinions are disposed on a differential gear, a case member is formed as an'integral structure, improved performance is provided in the differential gear, and production costs are reduced.

A differential device for automobiles generally includes: a differential gear containing left and right side gears and multiple pinions; and a case member housing the differential gear. These types of differential devices are often 2-pinion and 4-pinion gears. In 2-pinion differential devices, the structure is simple but the load on the pinions is high, leading to high wear on the pinion that shortens the lifespan. In 4-pinion differential devices, the structure is somewhat more complicated but the load on the pinions is low and the pinions have a longer lifespan.

The case member described above includes a main case section for housing the differential gear and a flange section. A ring gear is secured to this flange section using multiple bolts, and rotational drive force from the engine is transferred to the flange section by way of the ring gear. In some cases, this ring gear is formed integrally with the flange section.

In a differential device equipped with a 2-pinion differential gear described in Japanese utility model registration number 3071694, a case member is formed integrally, and openings are formed facing each other on both sides of the case member to allow assembly of the side gears and pinions. The pinions are disposed inside the perimeter walls on which the openings are not formed, and one shared pinion shaft is supported on the perimeter wall.

In a case structure for a differential device as described in Japanese laid-open patent publication number Hei 11-72158, a case member for housing a 2-pinion differential gear is formed from a ring-shaped main case body integral with a ring gear, and a pair of cover members, each one being secured to one axial end of the main case body.

In the case of a differential device equipped with a 4-pinion differential gear mechanism, the pinion shafts must be supported at four uniformly spaced positions along the perimeter of the wall of the case member. This makes forming the openings described above more difficult. Thus, the case member is generally formed as a two-part structure.

Forming the case member as a two-part structure increases the number of parts for the case member as well as requiring expensive machining operations, thus increasing production costs.

While production costs for the case member can be reduced by using a 2-pinion differential gear mechanism and an integrally formed case member, the use of larger side gears and pinions will require larger openings, leading to disadvantages relating to the rigidity and strength of the case member. Also, the pinions experience a high load, resulting in pinion wear and short lifespans.

The above, and other objects, features and advantages of the present invention will become apparent from the following description read in conjunction with the accompanying drawings, in which like reference numerals designate the same elements.

### OBJECTS AND SUMMARY OF THE INVENTION

The object of the present invention is to provide an automotive differential device that reduces pinion load to improve durability and reduce production costs for the case member.

In an automotive differential device transferring a rotational drive force from an automotive engine to a drive axle, the present invention provides an automotive differential device including: a differential gear mechanism equipped with a pair of side gears, three pinions meshing with the side gears, three pinion shafts pivotably supporting the three pinions, and a shaft supporting member supporting inner ends of the three pinion shafts; and a case member with an integral structure housing the differential gear mechanism. The case member includes a flange section receiving the rotational drive force by way of a ring gear, and a plurality of openings for mounting the side gears and pinions.

By providing three pinions in the differential gear mechanism, the load on the pinions can be reduced, durability can be improved, and high engine output can be handled. By providing a shaft support member for supporting the inner ends of the three pinion shafts, the inner ends of the three pinion shafts can be reliably supported.

Since the case member is formed as an integral structure, the production costs for the case member can be reduced. Since multiple openings are formed in the case member to mount the side gears and pinions, the side gears and pinions can be mounted in a reliable manner from these openings.

Preferred working examples will be described.

The three pinions are disposed so that axes thereof form 120 degree phase angles, and the plurality of openings is three openings formed at three equidistant positions along a perimeter wall section of the case member. Thus, shaft openings for supporting the pinion shafts can be formed on wall sections other than the three openings formed on the perimeter wall of the case member.

The three openings are two first openings for mounting the three pinions and one second opening for consecutively mounting the two side gears.

The first opening is a roughly D-shaped opening when seen from the side and is a roughly D-shaped opening with a straight section on a side toward the flange. The second opening is an opening with a shape different from that of the first opening, the shape being a special shape allowing the side gear to be mounted while in an inclined state when the side gear is mounted.

The flange section is secured to a separate ring gear using a plurality of bolts. A ring gear is formed integral with the flange section.

### BRIEF DESCRIPTION OF THE DRAWINGS

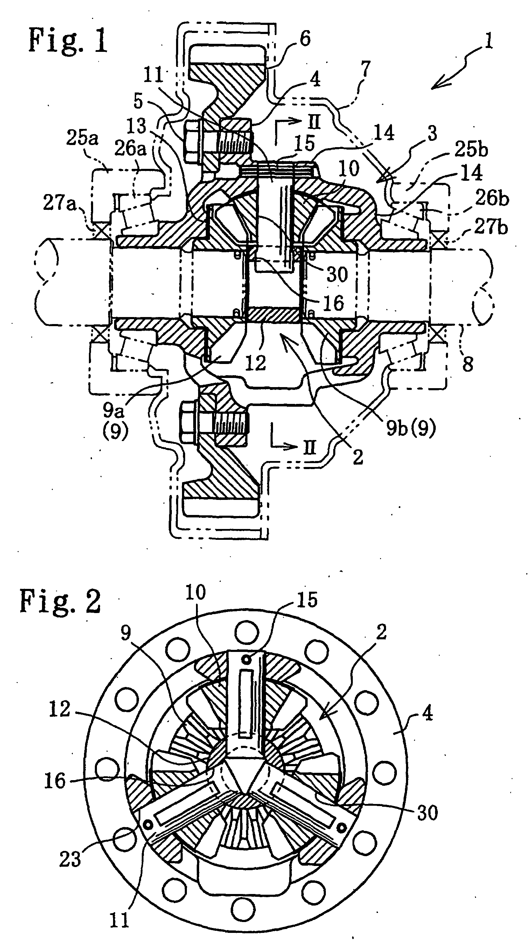

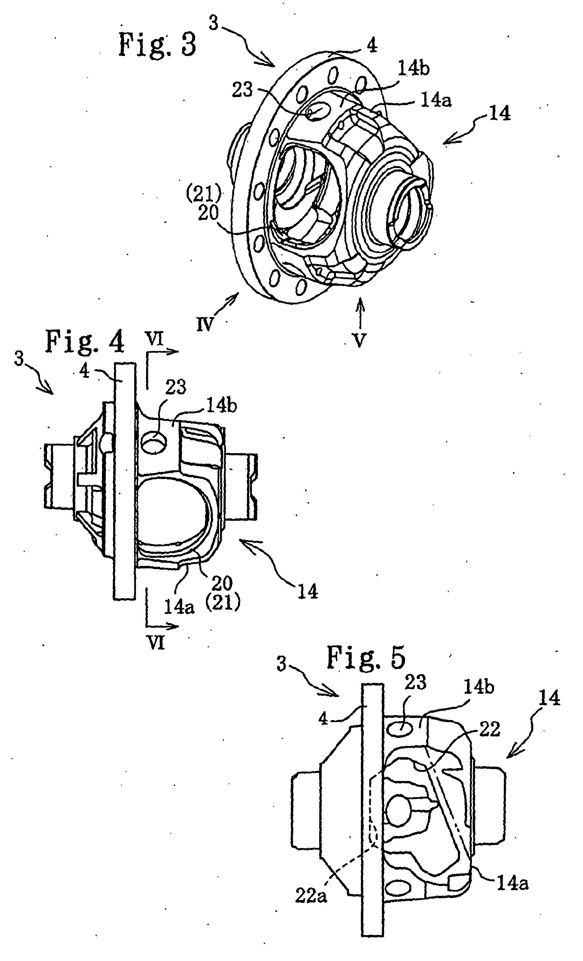

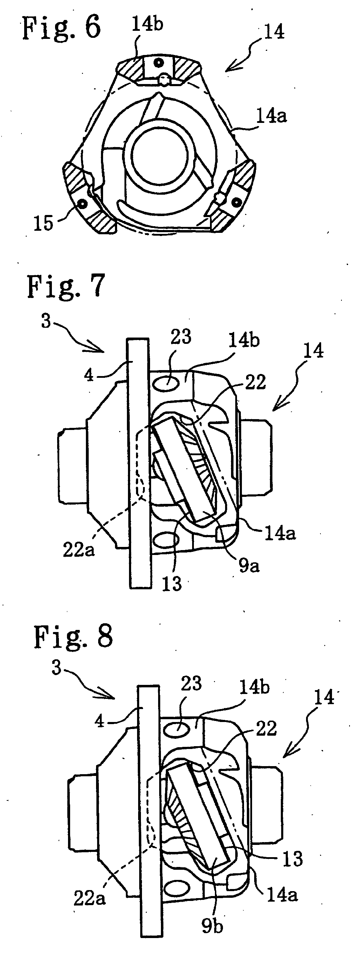

Fig. 1 is a cross-section drawing of an automotive differential device according to an embodiment. Fig. 2 is a cross-section drawing along the II-II line in Fig. 1. Fig. 3 is a perspective drawing of a case member. Fig. 4 is a side-view drawing of a case member when seen from the direction of arrow IV in Fig. 3. Fig. 5 is a bottom-view drawing of a case member as seen from arrow V in Fig. 3. Fig. 6 is a cross-section drawing along the VI-VI line Fig. 4. Fig. 7 is a drawing illustrating how a left side gear is assembled from a second opening. Fig. 8 is a drawing illustrating how a right side gear is assembled from a second opening.

### DETAILED DESCRIPTION OF THE PREFERRED EMBODIMENTS

In this embodiment, the present invention is used in an automotive differential device used to transfer rotational drive force from a front-wheel drive automotive engine to a drive axle.

As shown in Fig. 1 and Fig. 2, an automotive differential device 1 includes: a differential gear mechanism 2; a case member 3 formed with an integral structure and housing the differential gear mechanism 2; a ring gear 6 secured with multiple bolts 5 to a flange section 4 of the case member 3; and a differential case 7.

The differential gear mechanism 2 includes: a pair of side gears 9 connected respectively to ends of left and right drive axles 8 so that they cannot rotate relative to the drive axles; three pinions 10 meshing with these side gears 9; three pinion shafts 11 pivotably supporting the three pinions 10; a shaft support member 12 supporting the inner ends of the three pinion shafts 11; and a thrust washer 13 mounted between the case member 3 and the side gears 9.

The shaft support member 12 is formed as a short cylinder on which are disposed three support openings 16 positioned at three equidistant positions. The inner ends of the three pinion shafts 11 are passed through and supported by these support openings 16. The ring gear 6 described above is formed separately from the flange section 4. This ring gear 6 is secured to the flange section 4 with multiple bolts 5, and the rotational drive force from the engine is applied to this ring gear 6. The case member 3 includes: a main case body 14; the flange section 4 receiving the rotational drive force from the engine by way of the ring gear 6; and three openings 20, 21, 22 for mounting the side gears 9 and the pinions 10.

The three openings 20, 21, 22 are formed on the perimeter wall 14a of the main case body 14 at three equidistant positions around the axes of the pair of side gears 9.

The three openings 20, 21, 22 include two first openings 20, 21 for mounting the three pinions 10 and one second opening 22 for consecutively mounting the two side gears 9.

As shown in Fig. 3 through Fig. 7, when viewed from the side, the first openings 20, 21 form roughly D-shaped openings having roughly identical widths along the perimeter direction and the axial direction, with the side toward the flange 4 being straight. In Fig. 3 and Fig. 4, the two first openings 20, 21 are formed at the upper section of the main case body 14, and the widths along the perimeter direction of the first openings 20, 21 are approximately 20% of the total perimeter of the perimeter wall 14a of the main case body 14.

As shown in Fig. 5, Fig. 6, and Fig. 7, the second opening 22 is formed as an opening having a shape that is different from those of the first openings 20, 21. The second opening 22 is formed with a special side that allows the side gear 9 to be mounted while in an inclined orientation. The second opening 22 is roughly pentagonal, resembling a rectangle connected to the base side of an isosceles triangle having a 120 degree vertex angle. The sloped sides of the isosceles triangle are near the flange section 4, and the angle formed between the bottom side of the pentagon and the axis in Fig. 5 is roughly 60 degrees. In order to facilitate mounting of the side gear 9, a cavity 22a that connects to the second opening 22 is formed near the inside of the flange section 4.

Three pin holes 23 are formed on three strength perimeter walls 14b formed by the perimeter wall 14a of the main case body 14 between the first and second openings 20, 21, 22. The phase angle of the axes of the three pin holes 23 is 120 degree.

As shown in Fig. 1, the differential case 7 is a structure in which two separable differential case sections are secured using multiple bolts near the ring gear 6. The differential case 7 holds lubrication oil and surrounds the outer perimeter of the ring gear 6 and the case member 3 housing the differential gear mechanism 2. A bearing 26a is mounted between a ring section 25a at the left end of the differential case 7 and the main case body 14. A bearing 26b is mounted between a ring section 25b at the right end of the differential case 7 and the main case body 14. An oil seal 27b is mounted between the ring section 25b and an axle 8.

The case member 3 described above is cast from ductile iron or the like. The pinions 10 and the ring gear 6 are formed from standard materials used to form gear and the like (chromium molybdenum steel, nickel-chrome molybdenum steel, or the like), and carburizing is performed.

Next, a method for mounting the differential gear mechanism 2 in the case member 3 will be described briefly. As shown in Fig. 7, the left side gear 9a and the thrust washer 13 are tilted approximately 30 degrees and mounted in the main case body 14 from the second opening 22 to the position shown in Fig. 1.

Next, each of the pinions 10 is mounted from the two first openings 20, 21. With two side gears 9 and two pinions 10 rotated approximately 120 degrees clockwise or counter-clockwise, the shaft supporting member 12 is mounted from the first opening 20. Next, the remaining pinion is mounted from the first opening 20 so that it forms a 120 degree phase angle relative to the other two pinions 10.

Next, the two side gears 9, the three pinions 10, and the shaft supporting member 12 are rotated approximately 60 degrees clockwise or counterclockwise. The pin holes 30 of the three pinions 10 are aligned with the three pin holes 23 of the strength perimeter walls 14b, and the three pin holes 16 of the shaft supporting member 12 are aligned with the pin holes 30 of the three pinions 10. Next, for each pinion 10, a pinion shaft 11 is mounted in the pin hole 23 of the strength perimeter wall 14b, the pin hole 30 of the pinion 10, and the pin hole 16 of the shaft supporting member 12, and a spring pin 15 is mounted. The differential case 7 and the bearing 26 is assembled using any method known to those in the art.

Next, the operations and advantages of the automotive differential device 1 above will be described.

Since the differential gear mechanism 2 uses three pinions 10, the load to the pinions 10 can be reduced and the durability of the pinions 10 and the side gear 9 can be improved. Furthermore, higher rotational drive forces from the engine to the input ring gear 6 can be handled. Since the shaft supporting member 12 supports the inner ends of the three pinion shafts 11, the inner ends of the three pinion shafts 11 can be supported in a reliable manner.

Since the case member 3 is formed as an integral structure, the production costs for the case member 3 can be reduced. Since the case member 3 is formed with two first openings 20, 21 for mounting the three pinions 10 and a single second opening 22 for consecutively mounting the two side gears 9, the side gears 9 and the pinions 10 can be mounted easily and reliably.

Since the first and second openings 20, 21, 22 are formed at three equidistant positions along the perimeter wall 14a of the main case body 14 and the three pinions 10 are disposed so that their axes form 120 degree phase angles, thee pin holes 23 can be formed to support the three pinion shafts 11 on the three strength perimeter walls 14b of the perimeter wall 14a of the main case body 3, and the pinion shafts 11 can be mounted in the pin holes 23 to support the pinions 10.

Examples of partial modifications of the above embodiment will be described.
1) The shapes of the first and second openings 20, 21, 22 are just examples and the present invention is not restricted in the shapes shown in the figures.
2) The ring gear 6 can be formed integral with the flange section 4. In this case, it would be preferable for the case member 3 to be formed from a high-quality cast material such as austempered cast iron. The material used is not restricted to this, however.
3) The automotive differential device of this embodiment was described in a sample implementation as a differential device for a front-wheel drive automobile. However, the present invention can be implemented in a similar manner for a differential device in rear-wheel drive automobiles. In a differential device for rear-wheel drive automobiles, the ring gear would be a helical gear rather than a spur gear.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. In an automotive differential device transferring a rotational drive force from an automotive engine to a drive axle,
an automotive differential device comprising:
a differential gear mechanism equipped with a pair of side gears, three pinions meshing with said side gears, three pinion shafts pivotably supporting said three pinions, and a shaft supporting member supporting inner ends of said three pinion shafts; and
a case member with an integral structure housing said differential gear mechanism, said case member including a flange section receiving said rotational drive force by way of a ring gear, and a plurality of openings for mounting said side gears and pinions.

2. An automotive differential device as described in claim 1 wherein:
said three pinions are disposed so that axes thereof form 120 degree phase angles; and
said plurality of openings is three openings formed at three equidistant positions along a perimeter wall section of said case member.

3. An automotive differential device as described in claim 2 wherein:
said three openings are two first openings for mounting said three pinions and one second opening for consecutively mounting said two side gears.

4. An automotive differential device as described in claim 3 wherein:
said first opening is a roughly D-shaped opening when seen from the side and is a roughly D-shaped opening with a straight section on a side toward said flange; and
said second opening is an opening with a shape different from that of said first opening, said shape being a special shape allowing said side gear to be mounted while in an inclined state when said side gear is mounted.

5. An automotive differential device as described in claim 4 wherein said flange section is secured to a separate ring gear using a plurality of bolts.

6. An automotive differential device as described in claim 4 wherein a ring gear is formed integral with said flange section.
